# DEMANDE DE BREVET EUROPEEN

(11) **EP 1 146 693 A1**
(43) Date de publication de la demande: **17.10.2001**
(21) Numéro de dépôt: 01400410.5
(22) Date de dépôt: 16.02.2001
(51) Int. Cl.: H04L 12/28, H04L 29/06

(54) **Système de communication client serveur**

(30) Priorité: 21.02.2000 FR 0002360
(71) Demandeur: AEG SCHNEIDER AUTOMATION, 06560 Valbonne (FR)
(72) Inventeur: Brault, Gilbert, 06140 Vence (FR)

(57) **Abrégé**

La présente invention concerne un système de communication entre un automate programmable (PLC) pourvu d'un serveur HTTP et une machine cliente (C ) via un réseau (B), caractérisé par le fait qu'il comporte, dans l'unité centrale (UC) de cet automate, des moyens (API 1a) pour ajouter des "fiches groupes" (M1, M2...) au format XML dans lesquelles sont regroupés des éléments ou signaux destinés à observer ou commander le processus automatisé par l'application de l'automate programmable ainsi que des moyens (API 1b) pour ajouter / supprimer des éléments à ces fiches, en spécifiant leur type, des moyens (API 1c, API 1d) pour lire ou écrire ces éléments et des moyens (API 2b, API 2c, API 2d) pour lire ces fiches ou pour écrire dans ces fiches sur requête du serveur HTTP.

## Description

La présente invention concerne un système de communication entre un automate programmable serveur et une machine cliente, via un réseau ouvert.

Un réseau ouvert sert à connecter des dispositifs de traitement de données tels que des ordinateurs personnels et des appareils d'automatisation pour contrôler un procédé automatisé, par exemple dans un atelier de production industriel ou dans un bâtiment intelligent. Les réseaux basés sur la technologie TCP/IP constituent un exemple de réseau ouvert.

On connaît un automate programmable industriel doté dans son unité de traitement d'un serveur de requête interrogeable à distance via des protocoles liés au constructeur ou des protocoles standards. Ce serveur de requête permet de lire ou d'écrire les objets traités par le programme application de l'automate programmable, à savoir la mémoire application, structurée en bit et mots et les variables d'état de l'automate, les bits et mots système, les entrées-sorties.

Cet agencement permet l'indépendance entre les applications automates et les applications clientes. Néanmoins ce procédé a des inconvénients du point de vue de la sécurité et de l'utilisation des ressources de l'automate et du réseau.

L'insuffisance de sécurité apparaît dans un réseau hétérogène et vient aussi du fait de l'asynchronisme de l'échantillonnage des données, par rapport au cycle automate. Un poste client émet plusieurs requêtes pour observer un processus. Ces requêtes peuvent être servies à des cycles automates différents, les signaux observés pouvant avoir changé dans l'intervalle. Il y a donc un risque lié à l'acquisition d'un faux état.

En ce qui concerne l'utilisation des ressources, du fait que le serveur de requête procède par réponse à des questions provenant de l'application cliente, il faut que celle-ci répète en permanence sa question ( par exemple: "quelle est la valeur d'un bit mémoire donné "). Ce mécanisme est consommateur de ressources au niveau de l'unité centrale de l'automate. En effet cette unité centrale doit en permanence décoder les questions, toujours les mêmes, dans un temps donné. A titre indicatif, le temps moyen du décodage d'une requête de ce type est d'environ 5ms dans un automate. Ce qui signifie que pour obtenir l'état de 5 bits non consécutifs de l'espace adressable de l'automate, l'unité centrale, pour assurer ce service, dépensera 25ms sur le temps de cycle de l'automate ( en moyenne compris entre 50 et 100ms). Ce mécanisme est par ailleurs consommateur de ressources au niveau du réseau, le client envoyant en permanence des requêtes. Plus l'information est « éclatée » dans la « mémoire » de l'automate, plus le nombre de requêtes est grand et plus le temps d'occupation du réseau est élevé. Enfin, le taux d'efficacité est mauvais. En effet la requête "question" et la requête "réponse" pour obtenir l'état d'un bit sont codées sur plusieurs octets.

Un procédé industriel est piloté en appliquant des consignes et en observant les valeurs de signaux qui par la suite seront appelés "signaux d'interfaces". Par convention le programmeur automate peut, par exemple, définir qu'un bit mémoire %M5 représentera l'état du mode de marche d'une machine, la valeur du bit étant égale à 1 si la machine est en marche, ou égale à 0 si la machine est arrêtée. Une convention telle que celle ci-dessus à savoir "le bit %M5 représente l'état du mode de marche machine" est utilisée de manière implicite par les programmeurs des applications clientes sur le réseau. Si le programmeur automate souhaite changer ladite variable automate, en attribuant, par exemple, au bit %M6 la représentation de l'état du mode de marche machine en lieu et place de %M5, il doit aussi veiller à ce que les clients qui référencent cette information changent leur définition c'est à dire remplacent %M5 par %M6. En conclusion, dans un automate, la mémoire est banalisée et il n'y a pas de mécanisme permettant de partager, en toute sécurité entre le programme automate programmable et les applications clientes du réseau, la définition des signaux d'interface (observation et consignes) du procédé piloté, ceux-ci n'ayant pas été déclarés explicitement par le programmeur automate.

La présente invention a pour but d'améliorer la sécurité grâce au transport simultané de la définition et de la valeur des signaux ce qui diminue le risque de mauvaise interprétation d'un signal. De plus l'acquisition des signaux s'effectue de manière synchrone par rapport au cycle de l'automate programmable ce qui évite de générer de faux états et des aléas de fonctionnement. Elle permet de traiter un plus grand nombre de signaux par rapport à la solution actuelle, pour une architecture matérielle donnée. L'unité de traitement a moins de traitement à effectuer à chaque cycle et le réseau est utilisé de manière plus efficace.

L'invention permet d'ajouter des interfaces aux langages de programmation d'automates programmables de différents constructeurs (pourvus qu'ils aient un serveur HTTP dans leur unité centrale) et elle permet en conséquence de faire coopérer ces différents automates programmables en ayant une cohérence des signaux d'interfaces.

Le système de communication selon l'invention est caractérisé par le fait qu'il comporte, dans l'unité centrale de cet automate, des moyens pour ajouter des fiches (dites "fiches groupes") au format XML dans lesquelles sont regroupés des éléments ou signaux destinés à observer ou commander le processus automatisé par l'application de l'automate programmable ainsi que des moyens pour ajouter ou supprimer des éléments à ces fiches, en spécifiant leur type, des moyens pour lire ou écrire ces éléments et des moyens pour lire ces fiches ou pour écrire dans ces fiches sur requête du serveur HTTP.

Selon une caractéristique, chacun des éléments ou signaux est au format XML et comporte la définition y compris le type dudit signal ainsi que la valeur binaire.

Selon une autre caractéristique, le système comporte des moyens de lecture, dits de lecture complète, générant une image d'une "fiche groupe" qui est une réplique complète de la "fiche groupe", désignée par l'adresse URL de type DNS ou TCP-IP, le port du serveur HTTP et le nom de la "fiche groupe".

La présente invention va maintenant être décrite avec plus de détail en se référant à un mode de réalisation donné à titre d'exemple et représenté par les dessins annexés sur lesquels :
- La figure 1 montre une architecture de réseau ouvert implémentant le procédé selon l'invention;
- La figure 2 est un schéma fonctionnel de l'interface de programmation ou API conforme à l'invention ;

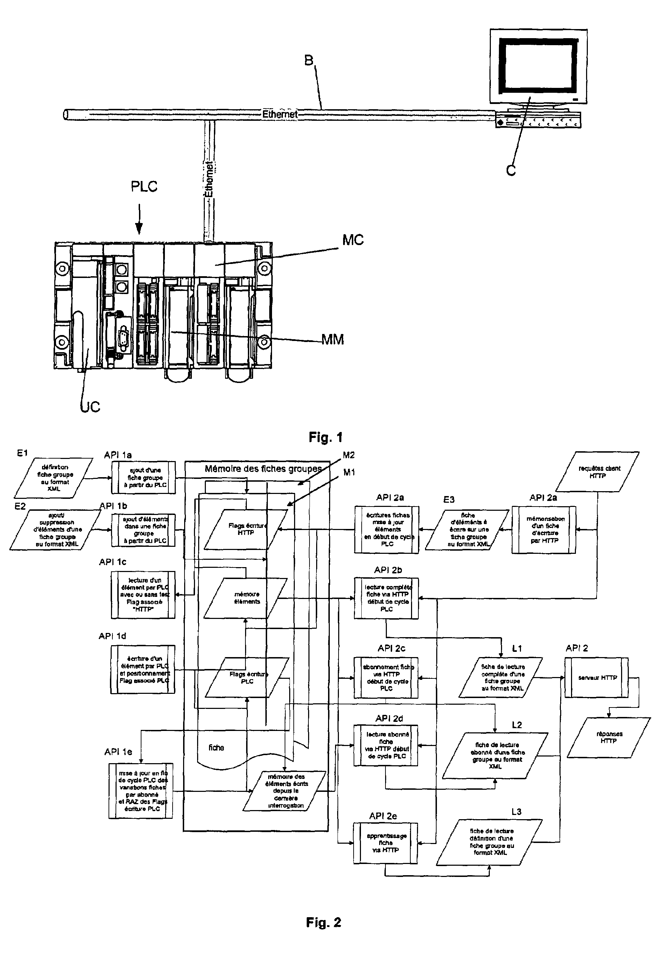

L'architecture de réseau ouvert illustrée à la figure 1 comporte un automate programmable PLC équipé d'une unité centrale UC, de modules MM ayant une fonction d'automatisme et d'un module de communication MC à fonction serveur. Ces modules et l'unité centrale communiquent par un bus de communication privé de fond de panier. Cet automate serveur PLC peut être connecté à d'autres automates programmables.

L'unité centrale UC de l'automate programmable contient un programme d'application écrit dans un langage commande d'automatisme habituel, « langage à contacts», etc... Son système d'exploitation gère les entrées-sorties et les variables internes qui sont les variables du programme automate.

Le module de communication MC est de type Ethernet et permet de raccorder cet automate à un réseau TCP-IP. Il est pourvu d'une mémoire centrale et d'un microprocesseur et peut communiquer, sous le protocole TCP-IP et via un bus de communication B, avec une machine cliente C (ici un ordinateur) connecté au même réseau et muni d'un navigateur adapté à XML.

Une interface de programmation dite API (« Application Programming Interface ») est stockée dans l'unité centrale UC et constitue une extension du système d'exploitation de l'automate.

Une "fiche groupe" (E1) est préalablement définie au format XML, avec un outil compatible avec le logiciel de conception du programme automate, pour regrouper des éléments ou « signaux » du procédé automatisé. Le programmeur application regroupe des éléments qui ont un sens pour observer ou commander le procédé automatisé par l'application d'automatisme et qu'il souhaite mettre à disposition avec une cohérence temporelle sur le réseau (échantillonnés en même temps). Seules les informations qu'il aura définies dans ces fiches seront partagées avec les applications clientes, c'est à dire que les applications clientes ne peuvent avoir accès qu'à ces informations. Le codage utilisé est conforme au standard XML du consortium W3C.

A titre d'exemple, la fiche E1 peut avoir le format suivant :
<machine1>
< état_de_marche_machine dt:dt="bit", comment="état mode de marche machine 1", marche="1", arret="0", interface="output"/>
<marche arrêt dt:dt="bit", comment="bouton marche / arrêt machine 1", marche="1", arrêt="0", interface="input"/>
</machine1>

L'interface API 1a permet d'ajouter, dans une zone particulière de la mémoire de l'automate programmable (dite mémoire des "fiches groupes") une «fiche groupe» telle que M1 ou M2... regroupant des éléments ou «signaux» du procédé automatisé précédemment définis. Chacun de ces éléments préalablement défini est représentatif d'un « signal » du procédé et permet d'en assurer la réplication sur le réseau. Il est défini au format XML.

Les "fiches groupes" mémorisées (M1, M2...) peuvent être transformées au court du temps (ajout ou suppressions de signaux). A titre d'exemple le format de la fiche d'ajout d'un élément est le suivant :
<machine1>
<compteur_horaire dt:dt="string", comment="nombre d'heures de fonctionnement", interface="output"/>
</machine1>

L'interface API 1b permet d'ajouter/supprimer, un élément à une fiche, en spécifiant le type (bit, entier, flottant, matrice de bits, mot..., chaîne de caractères...).

L'interface API 1c permet de lire la valeur d'un élément pour l'écrire dans une variable automate de même type, avec un mécanisme permettant d'indiquer si cet élément a changé de valeur par rapport au cycle précédent du programme automate (Flags écriture HTTP).

L'interface API 1d permet d'écrire une variable automate dans un élément et de positionner une information dans la structure "Flags écriture PLC" pour permettre aux services de lecture (complète ou abonnement) de savoir s'il faut faire une mise à jour.

Cette interface de programmation supporte un protocole de communication permettant de répliquer les fiches avec des applications clientes qui s'exécutent par exemple sur la machine cliente C. La réplication de l'information s'effectue en envoyant simultanément la valeur et la définition (y compris le type) des signaux.

L'interface API 2a définit rigoureusement les règles d'échantillonnage de l'information répliquée, en synchronisme avec le cycle de traitement de l'automate. Une application cliente a donc une image de l'information correspondant à une « photographie » de l'état de l'information à la fin du cycle automate. L'application automate a aussi une image cohérente des informations écrites par les applications clientes.

Un serveur HTTP est installé dans l'unité centrale UC de l'automate programmable. Une fiche est adressée par une URL indiquant l'adresse (DNS ou TCP-IP), le port du serveur HTTP suivi du nom de la fiche. L'adresse est donc sous la forme http://<adresse DNS ou TCP-IP> :port/<nom de la fiche. Lorsqu'il est sollicité par un client codant l'url de manière appropriée (par exemple: http://<adresse DNS ou TCP-IP> :port/définition /<nom de la fiche>), ce serveur HTTP retourne la définition de la fiche et de ses éléments. Des informations supplémentaires, de type descriptives (commentaires...) peuvent être gérées par une interface API 2e. L'interface API 2 permet grâce au protocole HTTP deux variantes de lecture dont l'une est appelée lecture complète et l'autre lecture abonné. Elle permet d'autre part l'écriture entre le client distant et le serveur automate.

La première variante de lecture appelée lecture complète et réalisée par l'interface API 2b génère une «fiche de lecture complète» (L1) qui est une réplique complète de la "fiche groupe" désignée par l'url (<nom de la fiche>, par exemple "machine1).

A titre d'exemple le format de L1 est le suivant:
<machine1>
<état_de_marche_machine dt:dt="bit">0</état_de_marche_machine >
<marche_arrêt dt:dt="bit">0</marche_arrêt>
<compteur_horaire dt:dt="string">"65h35min25sec"</compteur_horaire>
</machine1>

Cette fiche répliquée L1 comporte la définition du signal par exemple état_de_marche_machine, le type de la donnée "bit" et sa valeur 0 ou 1.

La seconde variante de lecture appelée lecture abonné et réalisée par l'interface API 2d génère une fiche L2 groupant les changements d'éléments d'une « fiche groupe » intervenant entre deux interrogations successives du serveur. L'abonnement préalable est réalisé grâce à l'interface API 2c.

A titre d'exemple le format de L2 est le suivant:
<machine1>
<état_de_marche_machine_dt:dt="bit">0</état_de_marche_machine>
</machine1>

Une fiche répliquée L2 comporte la définition du signal par exemple état_de_marche_machine, son type "bit" et sa valeur 0 ou 1.

Les requêtes d'écritures HTTP sont mémorisées successivement sous forme de fiches d'écriture (E3) au format XML.

A titre d'exemple, le format d'une fiche E3 est le suivant :
<machine1>
<marche_arrêt dt:dt="bit">1</marche_arrêt>
</machine1>

Cette fiche E3 comporte la définition du signal et sa valeur 0 ou 1.

L'écriture des fiches qui est réalisée par l'interface API 2a est déclenchée par l'application automate en début de cycle de manière à mettre à jour les fiches et leurs éléments. Elle positionne les indicateurs (Flags écriture HTTP) permettant au programme automate de tester si un élément a changé de valeur depuis le dernier cycle de traitement.

Une fiche répliquée (L1 ou L2 et E3) comporte la définition du signal par exemple état_de_marche_machine, son type dt:dt='bit' et sa valeur 0 ou 1. La mise à disposition de l'information est faite par le programmeur de l'automate qui lie une variable interne de l'automate avec le signal état_de_marche_machine (lecture d'un élément API 1c et lecture d'un élément API 1d). Il est dès lors possible de changer ladite variable interne sans être obligé d'avertir tous les clients qui eux ne « voient» que le signal « externe » état_de_marche_machine.

Le transport simultané de la définition et de la valeur des signaux diminue le risque de mauvaise interprétation d'un signal.

Seuls les signaux qui sont explicitement déclarés comme éléments des fiches (en utilisant les interfaces API la et API 1b) sont mis à disposition du réseau. C'est le programmeur qui décide de la manière dont on peut interagir avec le processus qu'il commande en déclarant les signaux d'interface de manière explicite.

L'acquisition des signaux du fait qu'elle est synchrone par rapport au cycle de l'automate programmable évite de répliquer une information incohérente pouvant générer des faux états et donc des aléas de fonctionnement (interface API 1e). Les signaux sont échantillonnés selon le principe acquisition des entrées / traitement / restitution des sorties.

Si quelque chose change dans le procédé, il est alors rendu disponible à l'extérieur. L'unité centrale est utilisée quand c'est nécessaire et aussi pour fournir une information plus riche sur les signaux (définition, valeur), grâce au codage XML.

Un client, avec une question de quelques octets (par exemple une requête HTTP de lecture générant la réponse L1 ou L2), est capable de connaître l'état complet de la partie de machine qui l'intéresse. En conséquence l'unité de traitement a moins de charge et il y a moins de traitement à effectuer à chaque cycle. Le réseau est utilisé de manière plus efficace du fait qu'il a plus d'information utile dans la même unité de temps par rapport à une solution connue.

Grâce au serveur HTTP, il est possible de générer des fiches de définition des fiches groupes (L3) au format XML qui permettent d'apprendre cette interface c'est à dire de comprendre la signification de ces signaux (API 2e).

A titre d'exemple le format d'une fiche L3 est le suivant :
<machine1>
< état de marche machine dt:dt="bit", comment="état mode de marche machine 1", marche="1", arret="0", interface="output"/>
<marche_arrêt dt:dt="bit", comment="bouton marche/arrêt machine 1", marche="1", arrêt="0", interface="input"/>
<compteur_horaire dt:dt="string", comment="nombre d'heures de fonctionnement", interface="output"/>
</machine1>

De manière optionnelle, il est aussi possible, lors de la création de ces éléments et de ces fiches d'apporter des commentaires de conception qui permettront d'aider à l'interprétation qu'il est loisible de faire de ces signaux d'interfaces dans une unité centrale d'automate lors de l'interrogation à partir d'un poste client équipé d'un navigateur adapté à XML.

Il est bien entendu que l'on peut sans sortir du cadre de l'invention imaginer des variantes et des perfectionnements de détail et de même envisager l'emploi de moyens équivalents.

## Revendications

1. Système de communication entre un automate programmable (PLC) pourvu d'un serveur HTTP et une machine cliente (C ) via un réseau (B), **caractérisé par le fait qu'**il comporte, dans l'unité centrale (UC) de cet automate, des moyens (API 1a) pour ajouter des "fiches groupes" (M1, M2...) au format XML dans lesquelles sont regroupés des éléments ou signaux destinés à observer ou commander le processus automatisé par l'application de l'automate programmable ainsi que des moyens (API 1b) pour ajouter / supprimer des éléments à ces fiches, en spécifiant leur type, des moyens (API 1c, API 1d) pour lire ou écrire ces éléments et des moyens (API 2b, API 2c, API 2d) pour lire ces fiches ou pour écrire dans ces fiches sur requête du serveur HTTP.

2. Système selon la revendication 1, **caractérisé par le fait que** chacun des éléments ou signaux est au format XML et comporte la définition y compris le type dudit signal ainsi que la valeur binaire.

3. Système selon la revendication 1 ou 2, **caractérisé par le fait qu'**il comporte des moyens (API 2b) de lecture, dits de lecture complète, générant une image d'une "fiche groupe" (L1) qui est une réplique complète de la "fiche groupe", désignée par l'adresse URL de type DNS ou TCP-IP, le port du serveur HTTP et le nom de la "fiche groupe".

4. Système selon l'une quelconque des revendications précédentes, **caractérisé par le fait qu'**il comporte des moyens (API 2d) de lecture, dits de lecture abonné, générant une fiche (L2) groupant les changements d'éléments d'une « fiche groupe» intervenant entre deux interrogations successives du serveur.

5. Système selon la revendication 4, **caractérisé par le fait qu'**il comporte des moyens (API 2c) d'abonnement.

6. Système selon l'une quelconque des revendications précédentes, **caractérisé par le fait qu'**il comporte un mécanisme à base d'indicateurs (Flags écriture HTTP) permettant au programme automate de tester si un élément a changé de valeur depuis le dernier cycle automate, après écriture par une fiche (E3) via le serveur HTTP.

7. Système selon l'une quelconque des revendications précédentes, **caractérisé par le fait qu'**il comporte des moyens (API 2a) de mémorisation et création des fiches d'écritures au format XML (E3) par requêtes HTTP ainsi que d'écriture des fiches (M1, M2) en début de cycle de manière à mettre à jour les fiches et leurs éléments.

8. Système selon l'une quelconque des revendications précédentes, **caractérisé par le fait qu'**il comporte des moyens (API 2e) pour créer une fiche de définition (L3) groupant des informations supplémentaires, de type descriptives (commentaires...).
